# EUROPÄISCHE PATENTSCHRIFT

(11) **EP 0 392 150 B1**
(45) Veröffentlichungstag und Bekanntmachung des Hinweises auf die Patenterteilung: **15.09.1993**
(21) Anmeldenummer: 90102544.5
(22) Anmeldetag: 09.02.1990
(51) Int. Cl.: A21B 1/28, A21B 1/06, A21B 1/40

(54) **Backofen mit Heizgasumwälzheizung**
Baker's oven with heating gas circulation
Four de boulangerie à circulation de gaz de chauffage

(30) Priorität: 08.04.1989 DE 3911604
(43) Veröffentlichungstag der Anmeldung: 17.10.1990
(73) Patentinhaber: Werner & Pfleiderer GmbH, 70469 Stuttgart (DE)
(72) Erfinder: Nghiem, Luong, Dr., D-7140 Ludwigsburg (DE); Schröder, Helmut, Dipl.-Ing.(FH), D-7120 Bietigheim-Bissingen (DE)

(56) Entgegenhaltungen:
- DE-A- 1 532 312
- FR-A- 1 552 161
- NL-A- 7 604 799

## Beschreibung

Die Erfindung betrifft einen Backofen mit Heizgasumwälzheizung nach dem Oberbegriff des Patentanspruches 1.

Backöfen der vorstehend erwähnten Art, die wegen der übereinander vorgesehenen Backräume auch als Etagenbacköfen bezeichnet werden, weisen eine schmale Bauform auf. Sie ergibt sich hauptsächlich aus der Anordnung der Verteiler- und Sammelschächte für die Heizgase an der Rückseite des Backofens. Allerdings hat diese Anordnung den Nachteil, daß die Backräume ungleichmäßig beheizt werden, weil die Wärmeabgabe durch die vorlaufenden Züge der Heizregister und der Wärmebedarf der Backräume über die Länge des Backofens einen entgegegengesetzten Verlauf aufweisen. Die Heizgase treten mit ihrer höchsten Temperatur an der Rückseite in die Heizregister ein und geben dort mehr Wärme an die Backräume ab als an der Stirnseite, wo die Heizgase bereits etwas abgekühlt sind. Dort besteht jedoch wegen der fehlenden Isolation an den Backraumtüren ein höherer Wärmebedarf als im rückwärtigen Teil der Backkammern.

Um diesem Nachteil zu begegnen, sind bei einem aus der DE-AS 12 54 554 bekannten Etagenbackofen mit Heizgasumwälzheizung die den Heizgasstrom in einer waagrechten Ebene in nebeneinander befindliche vor- und zurücklaufende Züge aufteilenden Zwischenwände schräg zur Strömungsrichtung der Heizgase angeordnet. Durch diese Anordnung wird der Strömungsquerschnitt verkleinert und die Strömungsgeschwindigkeit gesteigert, so daß an der Stirnseite des Backofens eine verstärkte Wärmeabgabe erfolgt. Diese günstige Wirkung kann aber nur in einem relativ engen Bereich auftreten. Über die Breite der Backräume ist jedoch die Wärmeabgabe trotzdem unterschiedlich. Die Herstellung solcher Heizregister ist wegen der Vielzahl an Leitblechen sehr aufwendig, außerdem besteht die Gefahr, daß sich Verbrennungsrückstände ablagern und dadurch die Strömungsverhältnisse sich verändern.

Bei einem anderen, aus der DE-OS 20 15 026 bekannten Backofen der eingangs genannten Art sind in einem Heizregister mehrere vor- und zurücklaufende Züge in abwechselnder Folge nebeneinander angeordnet. An den stirnseitigen Enden der die Züge unterteilenden Zwischenwände sind Stau- und Umlenkbleche vorgesehen, welche an den Umlenkstellen der Heizgase zu Wirbelbildungen führen sollen, wodurch in diesen Bereichen, in denen sich auch die Beschickungsöffnungen der Backräume befinden, eine erhöhte Wärmeabgabe sich einstellen soll. Ob bei diesem bekannten Heizregister tatsächlich eine gleichmäßige Wärmeverteilung zustande kommt, mag dahingestellt sein. Jedenfalls handelt es sich auch hier um eine sehr komplexe Konstruktion mit entsprechend hohem Herstellungsaufwand. Außerdem ergibt sich durch die zahlreichen Umlenkungen ein hoher Druckverlust im Umwälzsystem, der wiederum einen Ventilatorantrieb mit hoher Antriebsleistung und entsprechendem Platzbedarf erfordert.

Aus der DE-PS 54 65 58 ist eine offensichtlich für einen gemauerten Backofen bestimmte Heizanlage zur mittelbaren Beheizung von Backräumen bekannt, bei der die vor- und zurücklaufenden Züge für die Heizgase durch eine horizontale Zwischenwand gebildet sind. Die auf diese Weise übereinander angeordneten Züge sind wiederum in eine Vielzahl von schmalen, nebeneinander liegenden Kanälen unterteilt. Maßnahmen zur örtlichen Verstärkung der Wärmeabgabe sind nicht vorgesehen.

Eine andere Art, um bei Etagenbacköfen mit Heizgasumwälzheizung Bereiche erhöhter Wärmeabgabe zu bilden, ist aus der DE-PS 12 71 653 ersichtlich. Bei diesem Backofen strömen die Heizgase jeweils nur in einem Zug von einem an der Rückseite des Backofens befindlichen Verteilerschacht durch die Heizregister zu beiderseits der Vorderfront angebrachten Sammelschächten. Infolge der seitlichen Sammelschächte weist dieser Backofen, bei sonst gleicher Größe der Backkammern, eine größere Breite auf als bei rückseitig angeordneten Verteiler- und Sammelschächten. In den Heizregistern sind Schwellen vorgesehen, deren Höhe sich über einen Teil der lichten Höhe des Heizregisters erstreckt. Durch die unmittelbar an den wärmeübertragenden Wänden der Heizregister angeordneten Schwellen soll es zu einer Wirbelbildung mit erhöhter Wärmeabgabe kommen, was aber nur bedingt zutrifft. Die Wirbelbildung führt vor allem zu einem hohen Druckverlust und zu erhöhten Aufwendungen für die Heizgasumwälzung.

Der Erfindung liegt die Aufgabe zugrunde, bei einem Backofen gemäß dem Oberbegriff des Patentanspruches 1 wirksame Maßnahmen zur Verstärkung der Wärmeabgabe in Bereichen erhöhten Wärmebedarfs zu schaffen bei möglichst geringem Druckverlust im Umwälzkreislauf und einfachem konstruktivem Aufbau.

Diese Aufgabe wird erfindungsgemäß durch die im Kennzeichnungsteil des Patentanspruches 1 angegebenen Merkmale gelöst.

Das erfindungsgemäße Heizregister mit übereinander liegenden vor- und zurücklaufenden Zügen ist erheblich einfacher gestaltet und auch kostengünstiger zu betreiben als die sonst bei den gattungsgemäßen Backöfen verwendeten Heizregister. Bei dem neuen Heizregister gibt es nur eine Zwischenwand und nur eine Umlenkung der Heizgase. Die über die ganze Breite des Heizregisters sich erstreckende Züge bewirken eine gleichmäßige Beheizung in dieser Erstreckung. Die im vorderen Bereich der Backkammern notwendige verstärkte Wärmeabgabe erfolgt einerseits durch Erhöhung der Strömungsgeschwindigkeit im vorlaufenden Zug des Heizregisters, indem lediglich dessen Höhe verringert wird, z.B. durch Schrägstellung einer den Zug oben oder unten begrenzenden Wand, andererseits durch Zerstörung allein der wandnahen, den Wärmeübergang behindernden Grenzschichten mittels in dieser Schicht vorgesehener, gegenüber den inneren Wandflächen einen Abstand aufweisender Querstäbe. Die Stärke der Grenzschichten ist bei jeder Strömung eine feststehende Größe und beträgt bei Heizgasumwälzheizungen 2-3 mm. Infolge des Abstandes der Querstäbe zur inneren Wandfläche stellt sich zwischen diesen beiden Teilen eine Ausgleichströmung mit hoher Geschwindigkeit ein, die sowohl den Wärmeübergang verbessert als auch Ablagerungen verhindert. Im Vergleich zu den bekannten Wirbelschwellen ist der Druckverlust erheblich geringer.

Durch das Merkmal des Patentanspruches 2 ergibt sich eine optimale Ausgestaltung des Heizregisters hinsichtlich der Steigerung der Strömungsgeschwindigkeit und der Erhöhung der Wärmeabgabe.

Die Merkmale der Patentansprüche 3 und 4 geben vorteilhafte Bemessungen für die Querstäbe und deren Wandabstand an.

Durch die Merkmale der Patentansprüche 5 und 6 ist eine zweckmäßige Anordnung und Verteilung der Querstäbe über die Länge der Heizregister erreicht.

Mit den Merkmalen der Patentansprüche 7 und 8 sind vorteilhaft dimensionierte Abstandshalter geschaffen, welche die Bildung und Führung der Ausgleichsströmungen unterstützen.

Durch die Merkmale des Patentanspruches 9 ergibt sich ein aus den Querstäben und den Abstandshaltern bestehendes Gitter, welches einfach handhabbar und leicht in die Heizregister einsetzbar ist.

Ausführungsbeispiele der Erfindung sind anhand der Zeichnungen beschrieben. Es zeigt
- Fig. 1: einen längs der Backkammern geführten senkrechten Schnitt durch einen mit umgewälztem Heizgas beheizten mehretagigen Backofen,
- Fig. 2: einen Schnitt entsprechend Fig. 1, aber mit anders gestalteten Heizregistern,
- Fig. 3: eine Ausschnittsvergrößerung gemäß dem strichpunktierten Kreis III in Fig. 2 und
- Fig. 4: eine Teilansicht der Innenwand eines Heizregisters gemäß Linie IV - IV in Fig. 2.

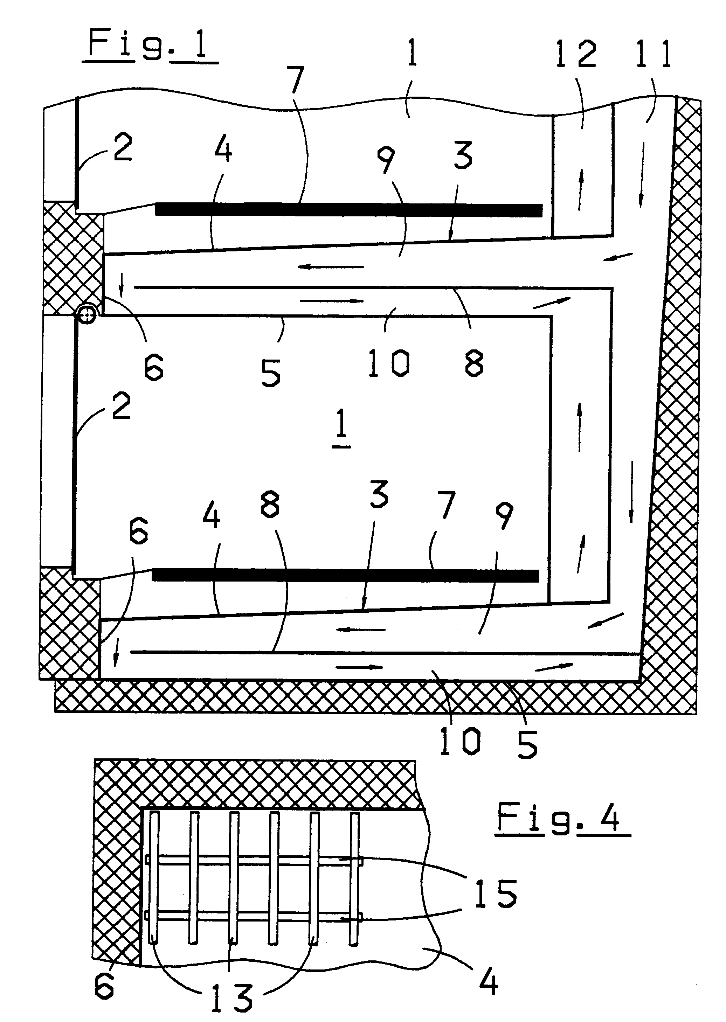

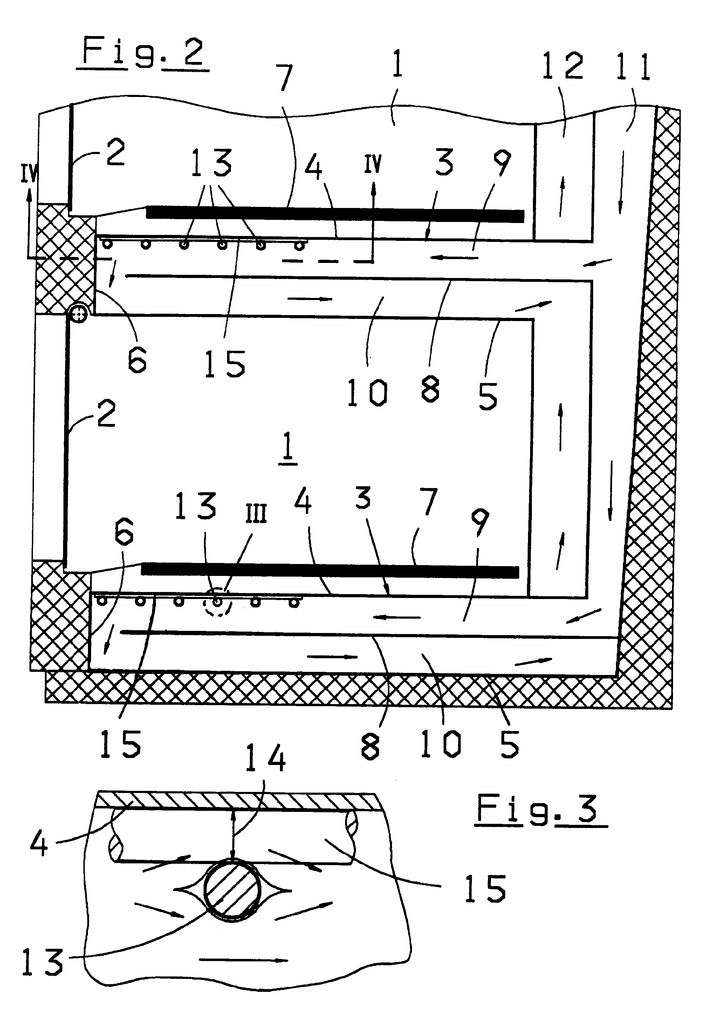

Die aus den Fig. 1 und 2 ersichtlichen Backöfen sind weitgehend identisch. Sie weisen mehrere übereinander angeordnete Backkammern 1 auf, von denen die unterste ganz und die zweite von unten teilweise dargestellt sind. Die Beschickungsöffnungen der Backkammern 1 sind durch Türen 2 verschließbar.

Zwischen den Backkammern 1 sowie unter der jeweils untersten und über der jeweils obersten Backkammer befinden sich von den Heizgasen durchströmte Heizregister 3, von denen jedes aus einer oberen Wand 4, einer unteren Wand 5 und einer Stirnwand 6 besteht. Die untere Wand 5 eines Heizregisters bildet, natürlich mit Ausnahme des unter der untersten Backkammer gelegenen Heizregisters, jeweils den oberen Abschluß einer Backkammer 1. Am Boden der Backkammern befindet sich jeweils eine Herdplatte 7, die in geringem Abstand über der oberen Wand 4 eines Heizregisters liegt.

Durch eine horizontale Zwischenwand 8, die sich über die ganze Breite des Heizregisters erstreckt und in einem Abstand zur Stirnwand 6 endet, sind im Heizregisters 3 zwei übereinander liegende Züge 9 und 10 für die Heizgase gebildet, welche im Bereich der Stirnwand 6 miteinander in Verbindung stehen. Die in einer nicht dargestellten Heizeinrichtung erzeugten und von einem ebenfalls nicht dargestellten Gebläse umgewälzten Heizgase werden, wie durch Strömungspfeile angedeutet, über einen an der Rückseite des Backofens angeordneten Verteilerschacht 11 in die vorlaufenden Züge 9 der Heizregister geleitet. Aus den zurücklaufenden Zügen 10 strömen die Heizgase in einen ebenfalls an der Rückseite des Backofens befindlichen Sammelschacht 12, von wo sie zur Saugseite des Gebläses gelangen. Die Heizeinrichtung und das Gebläse bilden in an sich bekannter Weise einen Energieblock, welcher bei den Ausführungsbeispielen oberhalb den Backkammern 1 angeordnet ist.

Bei den aus Fig. 1 ersichtlichen Heizregistern 3 ist jeweils die obere Wand 4 der vorlaufenden Züge 9 von deren Anschluß an den Verteilerschacht 11 bis zu der Stirnwand 6 gleichmäßig geneigt. Dadurch verringert sich über die ganze Breite des Heizregisters 3 die Höhe des vorlaufenden Zuges 9 stetig. Weil nun aber die Breite des Heizregisters konstant ist, ergibt sich ein in Strömungsrichtung stetig kleiner werdender Durchtrittsquerschnitt für die Heizgase. Infolge dessen erhöht sich die Strömungsgeschwindigkeit der Heizgase vom Eintritt in den vorlaufenden Zug 9 des Heizregisters bis zum Erreichen der Stirnwand 6.

Verbunden damit ist eine zunehmende Verstärkung des Wärmeübergangs in Strömungsrichtung, wodurch dem erhöhten Wärmebedarf im Bereich der Tür 2 Rechnung getragen wird. Eine den Anforderungen genügende Verstärkung des Wärmeübergangs bei nur mäßigem Druckverlust im Heizgaskreislauf ergibt sich, wenn die Verringerung der Höhe des vorlaufenden Zuges 9 über die ganze Länge des Heizregisters 40-60 %, vorzugsweise 50 % beträgt. Der zurücklaufende Zug 10 des Heizregisters weist über dessen ganze Länge die gleiche Höhe auf, weil längs dieses Zuges Wärmeabgabe und Wärmebedarf im wesentlichen gleichgerichtet sind.

Im Gegensatz zu der vorstehend beschriebenen Ausführungsform ist bei den Heizregistern 3 der Fig. 2 die Höhe der beiden Züge 9 und 10 durchweg gleich. Zur Verstärkung des Wärmeübergangs sind innerhalb der wandnahen Grenzschichten des durch die Züge strömenden Heizgases Querstäbe 13 in den Heizregistern 3 angeordnet. Das Besondere dabei ist, daß die Querstäbe 13 zwar nahe einer Wand des Heizregisters 3 angeordnet sind, zu der betreffenden Wandfläche aber einen Abstand aufweisen. Diese Wandfläche ist im Ausführungsbeispiel vorzugsweise die der oberen Wand 4 des Heizregisters 3. Infolge ihrer Wandnähe zerstören die Querstäbe lediglich die den Wärmeübergang behindernden Grenzschichten. Die übrige Strömung der Heizgase wird nicht beeinträchtigt. Zwischen der Wand 4 und dem Querstab 13 stellt siche eine Ausgleichströmung mit hoher Geschwindigkeit ein. Diese Situation ist in Fig. 3 dargestellt. Durch die genannten Maßnahmen wird der Wärmeübergang bei nur geringem Druckverlust erheblich verbessert.

Wie aus den Zeichnungen ersichtlich, weisen die Querstäbe 13 einen kreisrunden Querschnitt auf, dessen Durchmesser entsprechend der üblichen Stärke der Grenzschicht 2-3 mm beträgt. Ebenfalls im Hinblick auf die Grenzschichtstärke befinden sich die Querstäbe 13 in einem Abstand von 2-3 mm zu der Innenfläche der Wand 4. Um dem erhöhten Wärmebedarf im Bereich der Tür 2 zu entsprechen, sind die Querstäbe 13 nur in einem Bereich des Heizregisters 3 verteilt angeordnet, dessen Länge von der Stirnwand 6 aus gemessen 30-50 % der Gesamtlänge des Heizregisters 3 beträgt. In Fig. 2 sind die Querstäbe 13 in etwa gleichen Abständen nebeneinander angeordnet. Am vorteilhaftesten ist jedoch eine nicht gezeigte Anordnung, bei der sich die gegenseitigen Abstände der Querstäbe 13 in Strömungsrichtung nach einer dem theoretischen Temperaturabfall entsprechenden Exponentialfunktion verringern.

Wie aus den Fig. 2 und 4 ersichtlich, sind zwischen den Querstäben 13 und der vorzugsweise mit ihnen ausgestatteten Wand 4 in Strömungsrichtung verlaufende Abstandshalter 15 vorgesehen. Sie dienen zur Halterung der Querstäbe 13, stabilisieren zugleich aber auch die Ausgleichsströmung zwischen Wand und Querstab. Sie haben zweckmäßigerweise denselben Querschnitt wie die Querstäbe. Wenn die Querstäbe 13 und die Abstandshalter 15 an ihren Kreuzungsstellen miteinander verbunden werden, z .B. durch Schweißung, entsteht, wie aus Fig. 4 ersichtlich, ein Gitter, welches leicht handhabbar und mit einfachen Mitteln an der Wand 4 befestigbar ist.

## Patentansprüche

1. Backofen mit Heizgasumwälzheizung, welcher mehrere Backkammern (1) übereinander und dazwischen bzw. darüber und darunter von den Heizgasen durchströmte, mit an der Rückseite des Backofens befindlichen Verteiler-und Sammelschächten (11,12) für die Heizgase in Verbindung stehende Heizregister (3) aufweist, deren jedes durch mindestens eine nicht ganz bis zur Stirnwand (6) reichende Zwischenwand (8) in vor- und zurücklaufende Züge (9,10) für die Heizgase unterteilt ist, dadurch gekennzeichnet, daß die Heizregister (3) so gestaltet sind, daß an den Stellen erhöhten Wärmebedarfs ein verstärkter Wärmeübergang erfolgt, wobei die vor- und zurücklaufenden Züge (9,10) durch eine horizontale Zwischenwand (8) gebildet sind und übereinander liegen, und daß nachstehende Merkmale alternativ oder kumulativ vorgesehen sind:
a) Die Höhe des horizontal vorlaufenden Zuges (9) des Heizregisters (3) verringert sich in Strömungsrichtung der Heizgase;
b) innerhalb von wandnahen Grenzschichten des durch die Züge (9,10) strömenden Heizgases sind im vorderen Teil des Heizregisters (3) und im Abstand zu dessen inneren Wandflächen Querstäbe (13) angeordnet.

2. Backofen nach Anspruch 1, dadurch gekennzeichnet, daß die Verringerung der Höhe des vorlaufenden Zuges (9) über die ganze Länge des Heizregisters (3) 40-60 %, vorzugsweise 50 % beträgt.

3. Backofen nach Anspruch 1, dadurch gekennzeichnet, daß die Querstäbe (13) einen kreisrunden Querschnitt mit einem Durchmesser von 2-3 mm aufweisen.

4. Backofen nach Anspruch 1 oder 3, dadurch gekennzeichnet, daß der Abstand der Querstäbe (13) zu den inneren Wandflächen des Heizregisters (3) 2-3 mm beträgt.

5. Backofen nach einem der Ansprüche 1, 3 oder 4, dadurch gekennzeichnet, daß die Querstäbe (13) in einem von der Stirnwand (6) des Heizregisters (3) aus gemessenen Längsbereich von 30-50 % der Gesamtlänge des Heizregisters (3) verteilt angeordnet sind.

6. Backofen nach einem der Ansprüche 1 und 3 bis 5, dadurch gekennzeichnet, daß die gegenseitigen Abstände der Querstäbe (13) in Strömungsrichtung der Heizgase sich - vorzugsweise nach einer Exponentialfunktion - verringern.

7. Backofen nach einem der Ansprüche 1 und 3 bis 6, dadurch gekennzeichnet, daß zwischen den Querstäben (13) und der ihnen naheliegenden Wandfläche in Strömungsrichtung verlaufende Abstandshalter (15) vorgesehen sind.

8. Backofen nach Anspruch 7, dadurch gekennzeichnet, daß die Abstandshalter (15) denselben Querschnitt und dieselbe Querschnittsform wie die Querstäbe (13) aufweisen.

9. Backofen nach Anspruch 7 oder 8, dadurch gekennzeichnet, daß die Querstäbe (13) und die Abstandshalter (15) an ihren Kreuzungsstellen miteinander verbunden sind.

## Claims

1. Baking oven with hot gas circulation heating and comprising several baking chambers (1) one above the other and flowed through by the hot gases and heat radiators (3) therebetween or thereover and thereunder, which stand in communication with distributing and collecting shafts (11, 12), which are for the heating gases and disposed at the rear side of the baking oven and each of which is subdivided into forward and return flues (9, 10) for the heating gases by at least one partition (8) not reaching quite to the end wall (6), characterised thereby, that the heat radiators (3) are so structured that an increased heat transfer takes place at the points of increased heat requirement, wherein the forward and return flues (9, 10) are formed by an horizontal partition (8) and lie one above the other and that the following features are provided alternatively or cumulatively:
a) the height of the horizontal forward flue (9) of the heat radiator (3) reduces in the direction of flow of the heating gases;
b) transverse rods (13) are arranged in the front part of the heat radiator (3) and at a spacing from its inward wall surfaces within boundary layers, which are near to the wall, of the hot gas flowing through the flues (9, 10).

2. Baking oven according to claim 1, characterised thereby, that the reduction in the height of the forward flue (9) amounts to 40 to 60%, preferably 50% over the entire length of the head radiator (3).

3. Baking oven according to claim 1, characterised thereby, that the transverse rods (13) display a circularly round cross-section of a diameter of 2 to 3 millimetres.

4. Baking oven according to claim 1 to 3, characterised thereby, that the spacing of the transverse rods (13) from the inward wall surface of the heat radiator (3) amounts to 2 to 3 millimetres.

5. Baking oven according to one of the claims 1, 3 and 4, characterised thereby, that the transverse rods (13) are arranged distributed in a longitudinal region, measured from the end wall (6) of the heat radiator (3), of 30 to 50% of the total length of the heat radiator (3).

6. Baking oven according to one of the claims 1 and 3 to 5, characterised thereby, that the mutual spacings of the transverse rods (13) reduce in the direction of flow of the heating gases, preferably according to an exponential function.

7. Baking oven according to one of the claims 1 and 3 to 6, characterised thereby, that spacer members (15), which extend in direction of flow, are provided between the transverse rods (13) and the wall surface lying near them.

8. Baking oven according to claim 7, characterised thereby, that the spacer members (15) display the same cross-section and the same cross-sectional shape as the transverse rods (13).

9. Baking oven according to claim 7 or 8, characterised thereby, that the transverse rods (13) and the spacer members (15) are connected together at their crossing points.

## Revendications

1. Four de boulangerie à chauffage par circulation de gaz de chauffage, présentant plusieurs chambres de cuisson (1) superposées et entre celles-ci, c'est-à-dire au-dessus et en dessous des registres de chauffage (3), parcourus par les gaz de chauffage, communiquant avec des puits de répartition (11) et avec des puits collecteurs (12) de gaz de chauffage qui se trouvent à l'arrière du four de boulangerie, chacun de ces registres de chauffage étant subdivisé par au moins une paroi intermédiaire (8) n'allant pas complètement jusqu'à la paroi frontale (6) en un carneau dirigé vers l'avant et en un carneau dirigé vers l'arrière (9, 10) destinés aux gaz de chauffage, caractérisé en ce que les registres de chauffage sont conformés de façon telle qu'aux emplacements où il y a un besoin accru de chaleur, il se produise un transfert de chaleur renforcé, le carneau dirigé vers l'avant et le carneau dirigé vers l'arrière (9, 10) étant formés par une paroi intermédiaire horizontale (8) et étant superposés, ainsi que par le fait que l'on prévoit, isolément ou de façon cumulative, les caractéristiques suivantes :
a) la hauteur du carneau (9) se dirigeant horizontalement vers l'avant du registre de chauffage (3) se trouve réduite dans le sens de l'écoulement des gaz de chauffage ;
b) à l'intérieur des couches-limites, proches de la paroi, du gaz de chauffage s'écoulant dans les carneaux (9, 10) sont disposées des barres transversales (13), placées dans la partie avant du registre de chauffage (3), et situées à une certaine distance des surfaces de paroi intérieures de ce registre.

2. Four de boulangerie selon la revendication 1, caractérisé en ce que la réduction de la hauteur du carneau (9) dirigé vers l'avant sur toute la longueur du registre de chauffage (3) est de 40 à 60 %, de préférence de 50 %.

3. Four de boulangerie selon la revendication 1, caractérisé en ce que les barres transversales (13) présentent une section transversale ronde d'un diamètre de 2 à 3 mm.

4. Four de boulangerie selon la revendication 1 ou 3, caractérisé en ce que la distance entre les barres transversales (13) et les surfaces de paroi intérieures du registre de chauffage (3) est de 2 à 3 mm.

5. Four de boulangerie selon une des revendications 1, 3 ou 4, caractérisé en ce que les barres transversales (13) sont disposées en étant réparties dans une zone longitudinale dont la dimension, mesurée à partir de la paroi frontale (6) du registre de chauffage (3), est de 30 à 50 % de la longueur totale du registre de chauffage (3).

6. Four de boulangerie selon une des revendications 1 et 3 à 5, caractérisé en ce que les distances mutuelles des barres transversales (13) diminuent, de préférence selon une fonction exponentielle, dans le sens de l'écoulement **des gaz de chauffage**.

7. Four de boulangerie selon une des revendications 1 et 3 à 6, caractérisé en ce qu'entre les barres transversales (13) et la surface de paroi proche de celles-ci, on prévoit des organes (15) de maintien d'écartement, qui s'étendent dans la direction de l'écoulement.

8. Four de boulangerie selon la revendication 7, caractérisé en ce que les organes (15) de maintien d'écartement présentent la même section transversale et la même forme de section transversale que les barres transversales (13).

9. Four de boulangerie selon la revendication 7 ou 8, caractérisé en ce que les barres transversales (13) et les organes (15) de maintien d'écartement sont reliés entre eux, à leurs emplacements de croisement.
